# EUROPÄISCHE PATENTSCHRIFT

(11) **EP 1 200 174 B1**
(45) Veröffentlichungstag und Bekanntmachung des Hinweises auf die Patenterteilung: **26.03.2003**
(21) Anmeldenummer: 00952874.6
(22) Anmeldetag: 24.06.2000
(51) Int. Cl.: B01D 46/02, B01D 46/42

(54) **TASCHENFILTER MIT FILTERVLIES**
POCKET FILTER COMPRISING A NON-WOVEN FILTERING MATERIAL
FILTRE A POCHES, COMPORTANT UN NON-TISSE FILTRANT

(30) Priorität: 02.07.1999 DE 19930709
(43) Veröffentlichungstag der Anmeldung: 02.05.2002
(73) Patentinhaber: Bangert, Paul, 45219 Essen (DE)
(72) Erfinder: Bangert, Paul, 45219 Essen (DE)
(74) Vertreter: Schulte, Jörg, Dipl.-Ing.
(86) Internationale Anmeldenummer: DE0002079
(87) Internationale Veröffentlichungsnummer: WO01002078

(56) Entgegenhaltungen:
- WO-A-96/29138
- GB-A- 2 036 591
- US-A- 3 853 510
- US-A- 4 225 328
- US-A- 5 320 655

## Beschreibung

Die Erfindung betrifft einen Taschenfilter mit mehreren Filtertaschen aus einem Staub und ähnliche Schwebstoffe zurückhaltenden Filtermaterial.

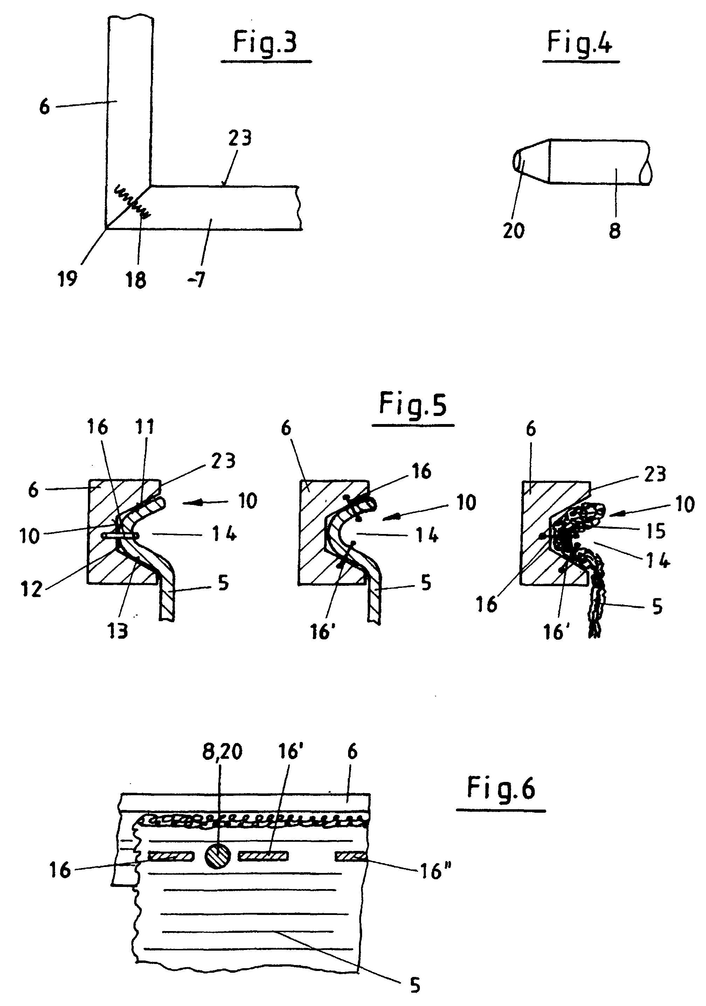

Solche Taschenfilter sind grundsätzlich aus der DE-PS 44 43 144.9 bekannt. Bei dem bekannten Taschenfilter besteht der Rahmen aus einem U-förmigen Frontrahmen und die einzelnen Filtertaschen mit dem Frontrahmen verbindenden Versteifüngsrahmen, der in die U-Form einzusetzen ist. Die Versteifungselemente, die entsprechend im Öffnungsbereich der Filtertaschen angeordnet sind, sollen dafür sorgen, dass die Öffnung immer so angeordnet ist, dass der durchtretende Luftstrom sicher aufgenommen und geführt wird. Zusätzlich sind auch noch quer dazu verlaufende Versteifungselemente vorgesehen, wobei die verschiedenen Elemente aus veraschbarem Werkstoff, insbesondere aus polymeren Werkstoffen bestehen. Durch diese Ausbildung soll die Möglichkeit erreicht sein, die gesamte Einheit zusammen mit dem eingelagerten Staub durch Verbrennung zu entsorgen. Nachteilig ist allerdings, dass die Herstellung derartiger Taschenfilter verhältnismäßig aufwendig ist, weil ein mehrteiliger Rahmen zum Einsatz kommt, wobei die Einzelteile des Rahmens ineinandergefügt werden müssen und zwar unter Einbeziehung des Filtervlieses. Nachteilig ist weiter, dass der für das Verbrennen des Kunststoffmaterials notwendige Energieaufwand verhältnismäßig hoch ist, zumal eine einwandfreie Verbrennung nur nach vorherigem Auseinandernehmen der Einzelteile möglich ist. Schließlich ist von Nachteil, dass ein derartiger Taschenfilter nicht verwindungssteif ist, von daher also schlecht zu handhaben und zu montieren ist. Darüber müssen zur Abdichtung zwischen Filtermaterial und Filtertaschen Fremdfilterdichtstoffe eingesetzt werden, wie beispielsweise Moosgummi, sodass ein weiterer Werkstoff hinzutritt, der bei der Entsorgung in aller Regel zusätzliche Probleme darstellt, der aber insbesondere beim Montieren des Taschenfilters besondere Obacht erfordert und den Filterquerschnitt nachteilig einengt. Dies gilt auch für einn Filterelement, das aus der De- 27 51 640 C2 bekannt ist und ein Filter zur Reinigung von Gasströmen kerntechnischer Anlagen beschreibt das toxische und radioaktive Bestandteile aus der Luft filtern soll. Das Filter weist Filtertaschen mit zickzackförmigem Filterpapier auf. Die Filtertaschen werden über Fandflansche verstärkt, die über einen Bordrahmen zusammengehalten und in einem Aufnahmerahmen dichtend eingesetzt sind. Aufgrund der Vielzahl von Rahmen und Flansche wird der Öffnungsquerschnitt stark eingeschränkt. Außerdem geht es bei diesem Stand der Technik um eine volumenverringerbare Ausführung der Filterelemnte, weshalb die Rahmen und Flansche aus elastischem, brechbarem oder ausreßbarem Mateerial bestehen soll. Dies ist für eine direkte Verbindung des Filtermaterials nicht geeignet und vorgesehen. Ähnlich aufgebaut ist die Lösung der GB-2 036 591-A, nur dass hier offensichtlich aus Metall bestehende Clips zum Zusammenfassen der Ränder der Filtertaschen und ein die Clips aufnehmender Rahmen vorgesehen ist. Auch diese Vielzahl von Rändern, Clips und Rahmen verringert den Eintrittsquerschnitt der Filtertaschen. Darüber hinaus handelt es sich um ein Mehrschichten-Filter, das schon aufgrund des Aufbaus einen entsprechend aufwendigen Rand erfordert, der mehrere Materialschichten fixieren muss. Die US 3,853,510 schließlich zeigt einen sehr aufwendigen Filteraufbau, der insbesondere aufgrund der aus den Figuren 3 und 5 entnehmbaren Zusammenfassung der Filtermaterialien und des Einschiebens der vom Filtermaterial umfassten Gitterstäbe eine sehr dicke Wulst ergibt, die im aus Metall bestehenden Rahmen untergebracht werden muss, sodass aufgrund der sich so zwangsweise ergebenden "dicken" Rahmens der Öffnungsquerschnitt der einzelnen Filtertaschen stark eingeschränkt ist. Die Metallteile und damit letztlich das gesamte Filter kann nur mit erheblichem Aufwand entsorgt werden.

Der Erfindung liegt daher die Aufgabe zugrunde, einen vom Aufbau her einfachen, ohne Fremddichtstoffe zu betreibenden, gut zu entsorgenden und einen möglichst optimalen Öffnungsquerschnitt und große Filterfläche erbringenden Taschenfilter zu schaffen.

Die Aufgabe wird gemäß der Erfindung dadurch gelöst, dass ein Taschenfilter mit mehreren Filtertaschen aus einem Staub und ähnliche Schwebstoffe zurückhaltenden Filtermaterial geschaffen wurde, das in einem Rahmen aus Profilleisten durch einzelne, nicht miteinander verbundene Fixier- und Versteifungsstäbe im Bereich der Taschenöffnung, selbsthaltend eingespannt ist, wobei die Profilleisten des Rahmens und die Fixierund Versteifungsstäbe aus Holz bestehen, die Profilleisten zur Aufnahme der Fixierund Versteifungsstäbe mit einer Nut ausgerüstet sind, die über zur Fixierung des Filtermaterials geeignet ausgebildete Wände verfügt und das Filtermaterial direkt mit den Profilleisten im Bereich der Wände unter Verzicht auf zusätzliche Filterdichtstoffe, selbstdichtend verbunden ist.

Mit einem derart ausgebildeten Taschenfilter kann zunächst einmal eine optimale Filterfläche bzw. ein großer Öffnungsquerschnitt zur Verfügung gestellt werden, weil diese im Gegensatz zum Stand der Technik lediglich durch die Profilleisten oder besser gesagt durch den schmalen Holzrahmen vorgegeben wird. Die Innenseite bzw. Innenkante des Rahmens stellt gleichzeitig die Begrenzung der Filteröffnung dar, wobei durch die besondere Wahl des Filtermaterials und der Profilleisten ein direktes Verbinden beider Materialien miteinander so möglich ist, dass die schon erwähnte günstige Öffnung bzw. Filterfläche zur Verfügung bleibt. Damit ist die Möglichkeit gegeben, mehr oder weniger große Taschenfilter herzustellen und einzusetzen, wobei diese Taschenfilter in der Regel eine rechteckige bzw. quadratische Öffnung aufweisen, durch die die staubhaltige oder sonstwelche Bestandteile mitbringende Luft hindurchgesaugt und dabei von den Schadstoffen und dem Staub befreit wird. Vorteilhaft ist weiter, dass damit die Möglichkeit gegeben ist, lediglich mit wenigen Materialien auszukommen, nämlich einmal mit dem Filtermaterial und zum anderen mit den aus Holz bestehenden Profilleisten und Stäben, wobei die Profilleisten so ausgebildete Nuten aufweisen, dass das Filtermaterial direkt mit den Wänden der Nut verbunden werden kann und zwar so fest fixiert, dass auch bei auftretenden Erschütterungen und sonstigen Belastungen das Filtermaterial ausreichend fixiert bleibt. Schon die Erläuterung verdeutlicht, dass der Aufbau eines derartigen Taschenfilters erstaunlich schnell und sicher abgewickelt werden kann und dass dann ein Gesamtfilter zur Verfügung steht, der problemlos auch zu entsorgen ist, weil sowohl das Filtermaterial wie die Profilleisten und die Fixier- und Versteifungsstäbe aus einem veraschbaren Material hergestellt werden können, über die die Entsorgung wie geschildert insgesamt vorteilhaft möglich ist. Brandstoffe, wie insbesondere Filterdichtstoffe, sind nicht notwendig und darüber hinaus sorgen die Fixierund Versteifungsstäbe aber auch die Befestigung des Filtermaterials an den Profilleisten dafür, dass ein vorteilhaft steifer, d. h. verwindungssteifer Rahmen zur Verfügung steht.

Nach einer zweckmäßigen Ausbildung der Erfindung ist vorgesehen, dass das Filtermaterial im Bereich der Taschenöffnung einen Mehrfachlagenrand bildend umgebördelt und dort mit den Profilleisten verbunden ausgebildet ist. Da aufgrund der Ausbildung der Nut und der Wahl des Materials für die Profilleisten die Möglichkeit gegeben ist, das Filtermaterial direkt an den Profilleisten festzulegen, wird die notwendige Abdichtung noch dadurch optimiert, dass zunächst das Filtermaterial umgeschlagen und daraus ein Mehrfachlagenrand gebildet wird, der dann an den Profilleisten fixiert wird. Wie die Fixierung abläuft und mit welchem Material insgesamt gearbeitet wird, ergibt sich aus den weiteren Merkmalen.

Ein besonders günstig im Sinne der Erfindung zu bearbeitendes Filtermaterial ist ein Filtervlies. Dieses Filtervlies ist verhältnismäßig preisgünstig und kann wirkungsvoll am Rahmen bzw. den Profilleisten mit einfachen Mitteln festgelegt werden, sodass die geschilderte günstige Verarbeitung möglich ist. Auch dann, wenn ein Mehrfachlagenrand aus dem Filtermaterial gebildet ist, d. h. also aus dem Filtervlies, bleibt nach der Fixierung an den Profilleisten der vorteilhaft "offene" Filterraum, also eine extrem günstige Filterfläche.

Weiter vorn ist darauf hingewiesen worden, dass die Teile des Taschenfilters zweckmäßigerweise durch Verbrennen entsorgt werden sollen, was insbesondere dann günstig und vorteilhaft möglich ist, wenn die Profilleisten und die Fixier- und Versteifungsstäbe als Holzprofile bzw. -stäbe ausgebildet sind. Nach einer zweckmäßigen Ausführungsform handelt es sich um Buchenholzprofile bzw. Buchenholzstäbe. Dieses Buchenholz ist besonders fest und damit optimal geeignet, über die Fixiermittel mit dem Filtermaterial d. h. dem Filtervlies verbunden zu werden. Das Filtervlies lässt sich gut an den Profilstäben festlegen und zwar bleibend, weil die Befestigungsmittel auch bei sich bewegenden Filterwänden oder sogar bei schlagenden Filterwänden nicht aus ihrer Fixierung gelöst werden können. Besonders zweckmäßig ist es, wenn die Profilleisten und die Fixier- und Versteifungsstäbe als Buchenholzprofile bzw. -stäbe ausgebildet sind.

Die hohe Festigkeit des Buchenholzes und die gute Verarbeitbarkeit wird gemäß der Erfindung dadurch unterstützt, dass die aus Holz bestehenden Profilleisten und die Fixier- und Versteifungsstäbe oberflächenbehandelt, vorzugsweise unter Einsatz von Feuchte und Wärme sonderbehandelt sind. Diese Sonderbehandlung verhindert Beeinträchtigungen des Profilleistenmaterials oder auch der Stäbe durch irgendwelche klimatischen oder sonstigen Verhältnisse. Das Holzmaterial, d. h. das sonderbehandelte Holzmaterial erweist sich als vorteilhaft stabil und gegen irgendwelche Beeinflussungen abweisend und resistent.

Eine weitere Möglichkeit ist die, das Holz, aus dem Profilleisten und Fixierund Versteifungsstäbe hergestellt sind, vorher oder nachher oberflächensonderzubehandeln, um auf diese Art und Weise das gewünschte resistente Material zu erreichen. Die dafür notwendige Doppelbehandlung ist in aller Regel sicherlich nicht notwendig, gibt aber die Möglichkeit, bei extremen Belastungen Material zur Verfügung zu stellen, das dennoch für die Veraschung, d. h. also die für die Entsorgung notwendige Verbrennung geeignet ist. Vielmehr kann das Material problemlos zusammen mit dem Filtermaterial und dem aufgefangenen Staub durch Verbrennen entsorgt werden.

Ein vorteilhaft zu verarbeitender Taschenfilter ist verwindungssteif, wobei diese Eigenschaft dadurch begünstigt wird, dass die Profilleisten endseitig unter rund 45° angeschrägt und dann über Wellennägel miteinander, ein verwindungssteifes Rechteck oder Quadrat ergebend verbunden sind. Die Wellennägel können leicht und ohne großen Aufwand verarbeitet werden, wobei sie eine vorteilhafte Stabilisierung des gesamten Rahmens ergeben und wenig Aufwand erfordern, weil sie einfach einzuschlagen sind. Im Bereich der Ecken, wo auch die Trennnaht zwischen benachbarten Profilleisten verläuft, sind diese Wellennägel so anzuordnen und zu fixieren, dass sie ihre Aufgabe voll erfüllen, ohne für die Verarbeitung oder auch später für die Entsorgung eine Behinderung darzustellen.

Eine besonders einfache und sichere Befestigung des Filtermaterials an den Wänden der Nut, d. h. also an den hölzernen Rahmen wird dadurch möglich, dass die Wände der Nut schräg von der breiten Nutöffnung auf den schmaleren Nutgrund hin zulaufend ausgebildet sind. Diese schrägen Wände sind bestens geeignet um das Filtermaterial dicht anzulegen und dann auf geeignete Art und Weise mit den Wänden, d. h. also mit dem Rahmen, zu verbinden. Vorteilhaft ist bei dieser schrägen Ausbildung der Wände der Nut außerdem, dass dadurch die verwendeten Verbindungsmittel in das Holz besonders gut eintreibbar sind, weil die Faserung durch die schräge Anordnung der Wände unterbrochen ist. Andererseits wirkt die Belastung des bewegten Filtermaterials und der Fixierung an den schrägen Wänden aufgrund des schrägen Verlaufes der Wände sich positiv aus, weil dadurch die zum Einsatz kommenden Verbindungsmittel optimal das Filtermaterial festklammern.

Zur Verbindung des Filtermaterials an den Wänden, vor allem den schräg verlaufenden Wänden ist vorgesehen, dass das Filtermaterial über ein Klammersystem direkt an den schrägen Wänden und/oder dem Nutgrund festgelegt ist. Diese Tackerklammern können mit geeigneten Hilfsmitteln, wie einer Pistole oder auch Klammern so festgelegt werden, dass das Filtermaterial über die gesamte Länge der Nut wirksam festgelegt ist und zwar so, dass Blindströme nicht entstehen können. Vielmehr wird im Bereich der Nut eine Abdichtung geschaffen, die selbstdichtend ist, sodass also das beschriebene staubhaltige Medium auf jeden Fall in das Innere der Filterkammern gelangt, um dort vom Schwebstaub oder anderen Medien befreit zu werden.

Die Fixier- und Versteifungsstäbe werden vorteilhaft mit in den Festlegungsprozeß des Filtermaterials einbezogen, in dem sie einen das Filtermaterial zugleich mitfixierenden, abgeflachten oder abgerundeten Kopf aufweisen. Die Fixier- und Versteifungsstäbe werden nämlich in Sackbohrungen eingeschoben, die im Nutgrund der Nut angeordnet und ausgebildet sind, sodass sie beim Einschieben in diese Bohrungen das Filtermaterial zumindest zum Teil miteinziehen und dann wirksam ergänzend festlegen. In der Regel wird das Antackern über die Tackerklammern dann erst anschließend vorgenommen, weil über die Fixier- und Versteifungsstäbe bereits eine Erstbefestigung erfolgt ist. Ein immer genauer Sitz ist so erreicht und sichergestellt und damit eine auf Dauer wirksame Rundumdichtung zwischen Filtermaterial und Rahmen.

Die Erfindung zeichnet sich insbesondere dadurch aus, dass eine Lösung geschaffen ist, über die trotz optimaler Verbindung zwischen Filtermaterial und Rahmen dennoch ein immer gleich großer Öffnungsquerschnitt, d. h. also eine immer optimale Filterfläche, zur Verfügung gestellt wird. Dabei zeichnet sich der Taschenfilter nicht nur durch die optimale Filterfläche aus, sondern auch dadurch, dass für die Abdichtung des Filtermaterials zum Rahmen hin keinerlei Fremdstoffe, insbesondere Moosgummi o. Ä. benötigt werden. Vielmehr wird das Filtermaterial direkt und so am Rahmen und der dafür vorgesehenen Nut befestigt, dass eine Selbstdichtung erreicht wird. Schließlich kann der gesamte Taschenfilter optimal entsorgt werden, weil als Material für den Rahmen aus hartem Holz bestehende Profilleisten und Fixier- und Versteifungsstäbe zum Einsatz kommen und weil eben im Bereich des Rahmens auf zusätzliche Dichtmaterialien vollständig verzichtet werden kann. Insgesamt gesehen ergibt sich so ein herstellungs-, verwendungs- und entsorgungsfreundlicher Taschenfilter.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein perspektivisch wiedergegebener Entsorgungsfilter mit großer Filterfläche,
- Figur 2: eine vergrößerte Wiedergabe mit Fixierung des Filtermaterials am Rahmen,
- Figur 3: eine Ansicht des Rahmens im Eckbereich,
- Figur 4: einen Fixier- und Versteifungsstab,
- Figur 5: mehrere Möglichkeiten der Festlegung des Filtermaterials im Bereich der Nut in einer Profilleiste im Schnitt und
- Figur 6: eine Draufsicht auf den Verbindungsbereich zwischen Filtermaterial und Profilleiste.

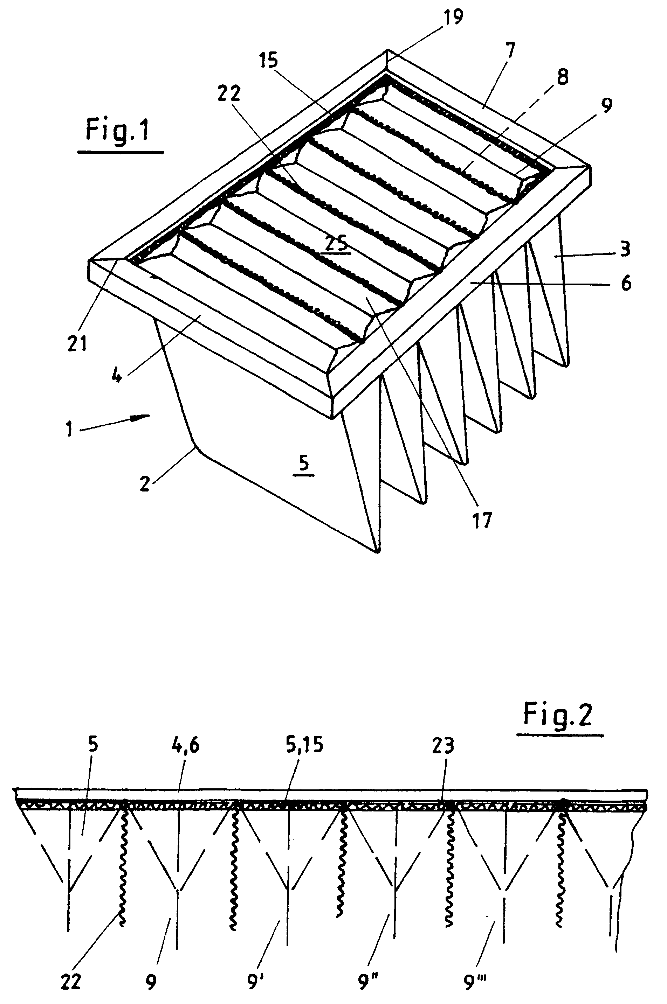

Figur 1 gibt eine Taschenfilter 1 mit großer Filterfläche bzw. Filteröffnung wieder, der in seiner Gesamtheit vollständig aufgrund seiner Ausbildung und Zusammensetzung durch Verbrennung entsorgt werden kann. Die einzelnen Filtertaschen 2, 3 sind in einem Rahmen 4 so eingespannt und dort so festgelegt, dass sich die geschilderte große Filterfläche ergibt.

Als Filtermaterial 5 kommt Filtervlies zum Einsatz, das besonders günstig und fest mit den aus Buchenholz oder ähnlichem Material bestehenden Rahmen 4 verbunden werden kann. Der Rahmen 4 ist hierzu als Profilleiste 6, 7 ausgebildet, in der die Fixier- und Versteifungsstäbe 8 so festgelegt und verspannt werden können, dass dadurch ein optimal steifer viereckiger oder rechteckiger Rahmen 4 darzustellen ist. Die einzelnen Taschenöffnungen 9 werden durch die hier durch das Filtermaterial 5 überdeckten Fixier- und Versteifungsstäbe 8 vorgegeben. Es handelt sich hier um rechteckige Öffnungen, in die die staubhaltige oder sonstige Schadstoffe mitbringende Luft hineingesaugt wird. Der Staub oder die Schadstoffe setzen sich dann an der Wandung 17, d. h. also an der Innenfläche des Filtermaterials 5 ab, sodass nach Abschluss der Einsatzzeit der gesamte Taschenfilter 1 entsorgt werden kann.

An den Ecken 19, 21 sind gemäß Figur 3 Wellennägel 18 als Verbindungsmittel eingesetzt. Über diese Wellennägel 18 kann ein optimal verwindungssteifer Rahmen 4 erreicht werden, wobei das Einbringen der Wellennägel 18 verhältnismäßig einfach ist und auch weitgehend maschinell abgewickelt werden kann.

Dieser entsprechend stabilisierte bzw. steife Rahmen 4 weist auf seiner Innenseite 23 eine Nut 10 auf, in die einmal die Fixier- und Versteifungsstäbe 8 eingesetzt werden können und in der außerdem auch gemäß der vorliegenden Ausbildung das Filtermaterial 5 so fixiert wird, dass es eine selbstdichtende Verbindung ergibt, die ohne weitere Fremdstoffe eine so optimale Abdichtung erbringt, dass damit vorteilhaft auch die schon erwähnte große Filterfläche zur Verfügung gestellt werden kann.

Gemäß Figur 2 und Figur 5 verfügt die Nut 10 über zum Nutgrund 12 schräg verlaufende Wände 11, 13, die sich optimal dazu eignen, zum Verbinden des Filtermaterials 5 ein Klammersystem, vorzugsweise Tackerklammern 16 oder andere Verbindungsmittel einzubringen. Die Tackerklammern 16 können entweder in eine der Wände 11, 13 und/oder in den Nutgrund 12 eingebracht werden, wobei die Nutöffnung 14 groß genug ist, um solche Hilfsmittel einzusetzen.

Im Nutgrund 12 sind außerdem im Abstand der Fixier- und Versteifungsstäbe 8 Bohrungen ausgebildet, in die die in Figur 4 wiedergegebenen Fixier- und Versteifungsstäbe 8 mit ihrem Kopf 20 eingesetzt werden können. Dabei wird automatisch auch das Filtermaterial 5 mit festgelegt und fixiert.

Die Figur 5 zeigt verschiedene Befestigungsmöglichkeiten des Filtermaterials 5 an der oder in der Nut 10, wobei überall sogenannte Tackerklammern 16 zum Einsatz kommen. Nach der rechten Darstellung ist ein Mehrfachlagenrand 15 gebildet, der eine besonders optimale Abdichtung in diesem Bereich erreicht, zumal es sich um Filtermaterial, d. h. um Filtervlies handelt, das sich auch noch gleichzeitig gut in die entsprechende Öffnung 14 einbringen lässt.

Figur 6 zeigt eine Ansicht, bei der deutlich wird, dass die Tackerklammern 16 bzw. Tackernadeln in einem dichten Abstand eingebracht werden, um so jedwede Fehlströme zu vermeiden.

Insbesondere Figur 1 verdeutlicht, welch große Filterfläche bei einem derartigen Taschenfilter 1 zu verwirklichen ist. Die Filterfläche wird quasi von dem Innenrand bzw. der Innenseite 23 des Rahmens 4 vorgegeben, über den keinerlei Material hinüberreicht, auch wenn in Figur 5 angedeutet ist, dass eine kleine Spitze überragen kann, was aber durch entsprechende Fixierung problemlos verhindert werden kann. Das gesamte Filtervlies stützt sich auch mit der Auflage 22 an den Fixier- und Versteifungsstäben 8 ab, sodass sich eine rundum durch Filtervlies abgedichtete und abgesicherte Filterfläche 25 ergibt. Die Filterfläche 25 ist erst hier mit einem Bezugszeichen versehen, um deutlich zu machen, dass sich diese optimale Filterfläche 25 durch die beschriebenen Maßnahmen bzw. Merkmale der vorliegenden Entwicklung ergeben, die allesamt notwendig sind, um den damit verbundenen Vorteil auch zu verwirklichen.

## Patentansprüche

1. Taschenfilter mit mehreren Filtertaschen (2, 3) aus einem Staub und ähnliche Schwebstoffe zurückhaltenden Filtermaterial (5), das in einem Rahmen (4) aus Profilleisten (6, 7) durch einzelne, nicht miteinander verbundene Fixier- und Versteifungsstäbe (8) im Bereich der Taschenöffnung (9), selbsthaltend eingespannt ist, wobei die Profilleisten (6, 7) des Rahmens (4) und die Fixier- und Versteifungsstäbe (8) aus Holz bestehen, die Profilleisten (6, 7) zur Aufnahme der Fixier- und Versteifungsstäbe (8) mit einer Nut (10) ausgerüstet sind, die über zur Fixierung des Filtermaterials (5) geeignet ausgebildete Wände (11, 12, 13) verfügt und das Filtermaterial (5) direkt mit den Profilleisten (6, 7) im Bereich der Wände (11, 12, 13) unter Verzicht auf zusätzliche Filterdichtstoffe, selbstdichtend verbunden ist.

2. Taschenfilter nach Anspruch 1,
**dadurch gekennzeichnet,**
**dass** das Filtermaterial (5) im Bereich der Taschenöffnung (9) einen Mehrfachlagenrand (15) bildend umgebördelt und dort mit den Profilleisten (6, 7) selbstdichtend verbunden ausgebildet ist.

3. Taschenfilter nach einem der vorhergehenden Ansprüche,
**dadurch gekennzeichnet,**
**dass** das Filtermaterial (5) ein Filtervlies ist.

4. Taschenfilter nach einem der vorhergehenden Ansprüche,
**dadurch gekennzeichnet,**
**dass** die Profilleisten (6, 7) und die Stäbe (8) als Buchenholzprofile bzw. Buchenholzstäbe ausgebildet sind.

5. Taschenfilter nach einem der vorhergehenden Ansprüche,
**dadurch gekennzeichnet,**
**dass** die aus Holz bestehenden Profilleisten (6, 7) und die Stäbe (8) oberflächenbehandelt, vorzugsweise unter Einsatz von Feuchte und Wärme sonderbehandelt sind.

6. Taschenfilter nach einem der vorhergehenden Ansprüche,
**dadurch gekennzeichnet,**
**dass** das Holz, aus dem Profilleisten (6, 7) und Stäbe (8) hergestellt sind, vorher oder nachher oberflächensonderbehandelt ist.

7. Taschenfilter nach einem der vorhergehenden Ansprüche,
**dadurch gekennzeichnet,**
**dass** die Profilleisten (6, 7) endseitig unter rund 45° angeschrägt und dann über Wellennägel (18) miteinander, ein verwindungssteifes Rechteck oder Quadrat ergebend verbunden sind.

8. Taschenfilter nach einem der vorhergehenden Ansprüche,
**dadurch gekennzeichnet,**
**dass** die Wände (11, 12, 13) der Nut (10) schräg von der breiten Nutöffnung (14) auf den schmaleren Nutgrund (12) hin zulaufend ausgebildet sind.

9. Taschenfilter nach einem der vorhergehenden Ansprüche,
**dadurch gekennzeichnet,**
**dass** das Filtermaterial (5) über ein Klammersystem direkt an den schrägen Wänden (11, 13) und/oder dem Nutgrund (12) festgelegt ist.

10. Taschenfilter nach einem der vorhergehenden Ansprüche,
**dadurch gekennzeichnet,**
**dass** die als Fixier- und Versteifungsstäbe ausgebildeten Stäbe (8) einen das Filtermaterial (5) zugleich mitfixierenden, abgeflachten oder abgerundeten Kopf (20) aufweisen.

## Claims

1. Pocket filter with a plurality of filter pockets (2, 3) made of a filtering material (5) retaining dust and similar suspended matter, fixed in a self-locking manner in a frame (4) made of profile strips (6, 7) by individual fixing and reinforcing bars (8) which are not connected to one another in the region of the pocket opening (9), wherein the profile strips (6, 7) of the frame (4) and the fixing and reinforcing bars (8) consist of wood, the profile strips (6, 7) are equipped with a groove (10) for receiving the fixing and reinforcing bars (8), the groove (10) having walls (11, 12, 13) suitable for fixing the filtering material (5) and the filtering material (5) is directly connected to the profile strips (6, 7) in a self-sealing manner in the region of the walls (11, 12), additional filter sealing materials being dispensed with.

2. Pocket filter according to claim 1, **characterised in that** the filtering material (5) provides a bead forming a multilayered edge (15) in the region of the pocket opening (9) and is connected there in a self-sealing manner to the profile strips (6, 7).

3. Pocket filter according to any one of the preceding claims, **characterised in that** the filtering material (5) is a non-woven filtering material.

4. Pocket filter according to any one of the preceding claims, **characterised in that** the profile strips (6, 7) and the bars (8) are designed as beech wood profiles or beech wood bars.

5. Pocket filter according to any one of the preceding claims, **characterised in that** the profile bars (6, 7) consisting of wood and the bars (8) are surface-treated, preferably specially treated using moisture and heat.

6. Pocket filter according to any one of the preceding claims, **characterised in that** the wood from which the profile strips (6, 7) and bars (8) are produced is subjected to a special surface treatment in advance or subsequently.

7. Pocket filter according to any one of the preceding claims, **characterised in that** the profile strips (6, 7) are bevelled at the end by about 45° and then connected to one another by corrugated fasteners (18), producing a torsionally rigid rectangle or square.

8. Pocket filter according to any one of the preceding claims, **characterised in that** the walls (11, 12, 13) of the groove (10) extend obliquely from the wide groove opening (14) toward the narrow groove base (12).

9. Pocket filter according to any one of the preceding claims, **characterised in that** the filter material (5) is fixed directly to the inclined walls (11, 13) and/or the groove base (12) via a clamp system.

10. Pocket filter according to any one of the preceding claims, **characterised in that** the rods (8) designed as fixing and reinforcing bars comprise a flattened or rounded head (20) also simultaneously fixing the filter material (5).

## Revendications

1. Filtre à poches comprenant plusieurs poches de filtration (2, 3) formé d'un matériau filtrant (5) retenant la poussière et les matières en suspension analogues, qui est monté par accrochage dans un cadre (4) formé de baguettes profilées (6, 7) par des nervures de fixation et de renforcement (8) individuelles non reliées l'une à l'autre dans la zone d'ouverture (9) des poches, les baguettes profilées (6, 7) du cadre (4) et les nervures de fixation et de renforcement (8) étant constituées de bois, les baguettes profilées (6, 7) présentant, pour la réception des nervures de fixation et de renforcement (8), une encoche (10) qui dispose de parois (11, 12, 13) conformées de manière appropriée pour la fixation du matériau filtrant (5) et le matériau filtrant (5) étant raccordé, de manière autoétanche, directement aux baguettes profilées (6, 7) dans la zone des parois (11, 12, 13) en supprimant ainsi l'emploi de matériaux étanches de filtre supplémentaires.

2. Filtre à poches selon la revendication 1, **caractérisé en ce que** le matériau filtrant (5) est bordé dans la zone d'ouverture (9) des poches de façon à former un bord à couches multiples (15) et y est raccordé de manière autoétanche aux baguettes profilées (6, 7).

3. Filtre à poches selon l'une quelconque des revendications précédentes, **caractérisé en ce que** le matériau filtrant (5) est un voile filtrant.

4. Filtre à poches selon l'une quelconque des revendications précédentes, **caractérisé en ce que** les baguettes profilées (6, 7) et les nervures (8) se présentent sous la forme de profilés en bois ou de nervures en bois de hêtre.

5. Filtre à poches selon l'une quelconque des revendications précédentes, **caractérisé en ce que** les baguettes profilées (6, 7) constituées de bois et les nervures (8) sont traitées en surface, de préférence traitées spécialement à la chaleur et à l'humidité.

6. Filtre à poches selon l'une quelconque des revendications précédentes, **caractérisé en ce que** le bois, dont les baguettes profilées (6,7) et les nervures (8) sont constituées, est traité spécialement en surface, préalablement ou postérieurement.

7. Filtre à poches selon l'une quelconque des revendications précédentes, **caractérisé en ce que** les baguettes profilées (6, 7) sont biseautées à environ 45° aux extrémités et ensuite raccordées l'une à l'autre via des clous ondulés (18) en formant un rectangle ou un carré rigide au gauchissement.

8. Filtre à poches selon l'une quelconque des revendications précédentes, **caractérisé en ce que** les parois (11, 12, 13) de l'encoche (10) sont formées avec une inclinaison progressive de la large ouverture (14) de l'encoche à la base plus étroite (12) de l'encoche.

9. Filtre à poches selon l'une quelconque des revendications précédentes, **caractérisé en ce que** le matériau filtrant (5) est fixé via un système d'agrafage directement sur les parois inclinées (11, 13) et/ou sur la base (12) de l'encoche.

10. Filtre à poches selon l'une quelconque des revendications précédentes, **caractérisé en ce que** les nervures (8) conformées en nervures de fixation et de renforcement présentent une tête aplatie ou arrondie (20) fixant conjointement aussi le matériau filtrant (5).
